# EUROPEAN PATENT APPLICATION

(11) **EP 3 174 358 A1**
(43) Date of publication of application: **31.05.2017**
(21) Application number: 15746817.4
(22) Date of filing: 12.02.2015
(51) Int. Cl.: H04W 76/02, H04N 21/40, H04W 12/04, H04W 12/06

(54) **METHOD AND DEVICE FOR COMMUNICATIVELY CONNECTING WITH INTELLIGENT TERMINAL**

(30) Priority: 25.07.2014 CN 201410361198
(71) Applicant: ZTE Corporation, Shenzhen, Guangdong 518057 (CN)
(72) Inventor: CHEN, Jun, Shenzhen Guangdong 518057 (CN); HUANG, Qiang, Shenzhen Guangdong 518057 (CN); CHAI, Yawei, Shenzhen Guangdong 518057 (CN)
(74) Representative: HGF Limited
(86) International application number: PCT/CN2015/072938
(87) International publication number: WO 2015/117573

(57) **Abstract**

A method and apparatus for communicating and connecting with an intelligent terminal are disclosed. A wireless peripheral in the embodiments of the present invention acquires wireless access point information corresponding to an intelligent terminal prompted by the intelligent terminal with which communication connection needs to be performed; and according to the acquired wireless access point information of the intelligent terminal, performs the communication connection with the intelligent terminal by connecting a wireless access point corresponding to the wireless access point information. The embodiments of the present invention simplifies the wireless connection configuration operations required to be performed when wireless transmission is utilized in the related art, which improves the usability of the wireless network peripheral wirelessly communicating and connecting with the intelligent terminal.

## Description

### Technical Field

The present invention relates to the wireless connection technology, and in particular to a method and apparatus for communicating and connecting with an intelligent terminal.

### Background

At present, when a network peripheral connects with an accessed intelligent terminal in communication, generally two access modes namely a wired mode and a wireless mode are adopted. When the wired mode is adopted to perform connection, the network peripheral accesses the intelligent terminal via a USB interface by means of USB connection. But the USB data transmission bandwidth is low. Data transmission by using the USB cannot meet demands when the data volume required to be transmitted is greater and the timeliness is required to be higher for data processing.

When the wireless mode is adopted to perform connection, complicated and tedious wireless connection settings need to be performed. For example, it is required to set the wireless connection wifi of the intelligent terminal to a wireless access point (AP) mode, and then the network peripheral accesses the intelligent terminal according to AP information of the intelligent terminal. Once the intelligent terminal is changed or an intelligent terminal is newly added, it is required to reconfigure related configuration information such as an AP mode corresponding to the intelligent terminal, and the like, and re-access the network peripheral to the updated intelligent terminal. Configurations of such wireless connection mode are complicated and the users are required to master certain network configuration technologies, thus the usability is not high.

### Summary

In view of the above contents, it is necessary to provide a method and apparatus for communicating and connecting with an intelligent terminal, to improve the usability of a network peripheral performing wireless communication connection with the intelligent terminal.

An embodiment of the present invention provides a method for communicating and connecting with an intelligent terminal, which includes the following steps:
acquiring wireless access point information corresponding to an intelligent terminal prompted by the intelligent terminal with which communication connection needs to be performed; and
performing the communication connection with the intelligent terminal by connecting a wireless access point corresponding to the wireless access point information according to the acquired wireless access point information of the intelligent terminal.

Alternatively, the step of acquiring wireless access point information corresponding to an intelligent terminal prompted by the intelligent terminal with which communication connection needs to be performed includes:
scanning, by using a camera device, a graphic code of the wireless access point displayed by the intelligent terminal, parsing the scanned graphic code, and acquiring the wireless access point information, herein the graphic code comprises the wireless access point information corresponding to the intelligent terminal.

Alternatively, the step of acquiring wireless access point information corresponding to an intelligent terminal prompted by the intelligent terminal with which communication connection needs to be performed includes:
scanning, by using a camera device, a graphic code of the wireless access point displayed by an external display apparatus connected with the intelligent terminal, parsing the scanned graphic code, and acquiring the wireless access point information, herein the graphic code includes the wireless access point information corresponding to the intelligent terminal.

Alternatively, the step of acquiring wireless access point information corresponding to an intelligent terminal prompted by the intelligent terminal with which communication connection needs to be performed includes:
receiving, by using an audio device, audio data of the wireless access point played by the intelligent terminal, parsing the received audio data, and acquiring the wireless access point information, herein the audio data includes the wireless access point information corresponding to the intelligent terminal.

Alternatively, the wireless access point information includes an access name and an access password of the wireless access point corresponding to the intelligent terminal.

An embodiment of the present invention further provides an apparatus for communicating and connecting with an intelligent terminal, which includes:
an information acquisition module, arranged to acquire wireless access point information corresponding to an intelligent terminal prompted by the intelligent terminal with which communication connection needs to be performed; and
a communication connection module, arranged to: perform the communication connection with the intelligent terminal by connecting a wireless access point corresponding to the wireless access point information according to the acquired wireless access point information of the intelligent terminal.

Alternatively, the information acquisition module is arranged to:
scan, by using a camera device, a graphic code of the wireless access point displayed by the intelligent terminal, parse the scanned graphic code, and acquire the wireless access point information, herein the graphic code includes the wireless access point information corresponding to the intelligent terminal.

Alternatively, the information acquisition module is arranged to:
scan, by using a camera device, a graphic code of the wireless access point displayed by an external display apparatus connected with the intelligent terminal, parse the scanned graphic code, and acquire the wireless access point information, herein the graphic code includes the wireless access point information corresponding to the intelligent terminal.

Alternatively, the information acquisition module is arranged to:
receive, by using an audio device, audio data of the wireless access point played by the intelligent terminal, parse the received audio data, and acquire the wireless access point information, herein the audio data includes the wireless access point information corresponding to the intelligent terminal.

Alternatively, the wireless access point information includes an access name and an access password of the wireless access point corresponding to the intelligent terminal.

Embodiments of the present invention further provide a computer program and a storage medium thereof, the computer program includes a program instruction, when the program instruction is executed by a device that communicates and connects with an intelligent terminal, the device may execute the above method for communicating and connecting with the intelligent terminal; and the storage medium stores the computer program.

In the embodiments of the present invention, a wireless peripheral acquires wireless access point information corresponding to an intelligent terminal prompted by the intelligent terminal with which communication connection needs to be performed, and performs the communication connection with the intelligent terminal by connecting a wireless access point corresponding to the wireless access point information according to the acquired wireless access point information of the intelligent terminal. Compared to the related art that requires to perform complicated and tedious wireless connection configuration operations when transmitting by wireless, the embodiments of the present invention have a beneficial effect of improving the usability of the wireless network peripheral wirelessly communicating and connecting with the intelligent terminal.

### Brief Description of Drawings

FIG. 1 is a flow chart of a method for communicating and connecting with an intelligent terminal according to an embodiment of the present invention;
FIG. 2 is a schematic diagram of operating environment deployment of an application scenario of a method for communicating and connecting with an intelligent terminal according to an embodiment of the present invention; and
FIG. 3 is a schematic diagram of function modules of an apparatus for communicating and connecting with an intelligent terminal according to an embodiment of the present invention.

### Detailed Description

The embodiments of the present invention will be described in detail in combination with the accompanying drawings below. It should be noted that the embodiments in the present invention and the characteristics in the embodiments may be arbitrarily combined with each other in the case of no conflict. Moreover, though a logical sequence is shown in the flow chart, the illustrated or described steps may be executed in a sequence different from the logical sequence here in some cases. It should be understood that the specific embodiments described here are only used to explain the present invention, which are not used to limit the present invention.

In the embodiments of a method and apparatus for communicating and connecting with an intelligent terminal of the present invention, a communication connection is performed between the intelligent terminal and a wireless peripheral device with a wireless communication function (hereinafter called a wireless peripheral for short) by means of wireless communication, after the wireless peripheral and the intelligent terminal are in communication connection, the wireless peripheral accesses the Internet based on the intelligent terminal with the communication connection. The wireless peripheral includes, but is not limited to: a wireless camera, a wireless headset, and so on. The embodiments of the present invention do not limit particularly the specific types and specific representation forms of the wireless peripheral. Herein, the apparatus for communicating and connecting with the intelligent terminal according to the embodiments of the present invention may be interpreted as one kind of the wireless peripheral.

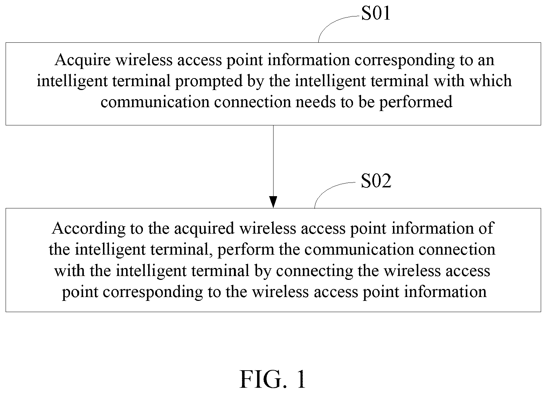

With reference to FIG. 1, FIG. 1 is a flow chart of a method for communicating and connecting with an intelligent terminal according to an embodiment of the present invention. As shown in FIG. 1, the method for communicating and connecting with the intelligent terminal according to the embodiment of the present invention includes the following steps.

In step S01, wireless access point information corresponding to an intelligent terminal prompted by the intelligent terminal with which communication connection needs to be performed is acquired.

In the embodiment of the present invention, when a wireless peripheral with the wireless communication function performs the communication connection with the intelligent terminal, the intelligent terminal is usually taken as a wireless access point, and the wireless peripheral acquires the wireless access point information, such as an access name and an access password of the wireless access point, corresponding to the intelligent terminal itself prompted by the intelligent terminal. In the embodiment of the present invention, if prompt ways of the intelligent terminal prompting the included wireless access point information of the intelligent terminal itself are different, acquisition ways of the wireless peripheral acquiring the wireless access point information of the intelligent terminal are also different. That is, the wireless peripheral adopts a corresponding acquisition way according to a prompt way of the intelligent terminal prompting the wireless access point corresponding to the intelligent terminal, so as to acquire the wireless access point information prompted by the intelligent terminal.

In step S02, according to the acquired wireless access point information of the intelligent terminal, the communication connection is performed with the intelligent terminal by connecting the wireless access point corresponding to the wireless access point information.

After acquiring the wireless access point information prompted by the intelligent terminal, the wireless peripheral connects the wireless access point corresponding to the wireless access point information according to the acquired wireless access point information, so as to perform the communication connection with the intelligent terminal mapped by the wireless access point information. For example, the wireless peripheral searches all wireless access points that may be searched according to an acquired access point name, and seeks a wireless access point of which the name is consistent with the access point name. After finding the wireless access point corresponding to the access point name, the wireless peripheral logs in the wireless access point corresponding to the access point name by using an access point password in the acquired wireless access point information, so as to perform the communication connection with the intelligent terminal mapped by the wireless access point.

Furthermore, in an embodiment of the present invention, when the intelligent terminal displays the wireless access point information corresponding to the intelligent terminal through a display device such as a display screen configured in the intelligent terminal itself, for example, when the intelligent terminal displays a graphic code including the wireless access point information of the intelligent terminal through the display screen of the intelligent terminal itself, the wireless peripheral such as a wireless camera scans the graphic code displayed by the intelligent terminal, and parses the scanned graphic code, so as to acquire the wireless access point information corresponding to the intelligent terminal. Herein, the graphic code including the wireless access point information of the intelligent terminal itself displayed by the intelligent terminal includes a one-dimensional barcode, a two-dimensional barcode or other types of graphic codes. The embodiments of the present invention do not limit specific representation forms of the graphic code including the wireless access point information displayed by the intelligent terminal.

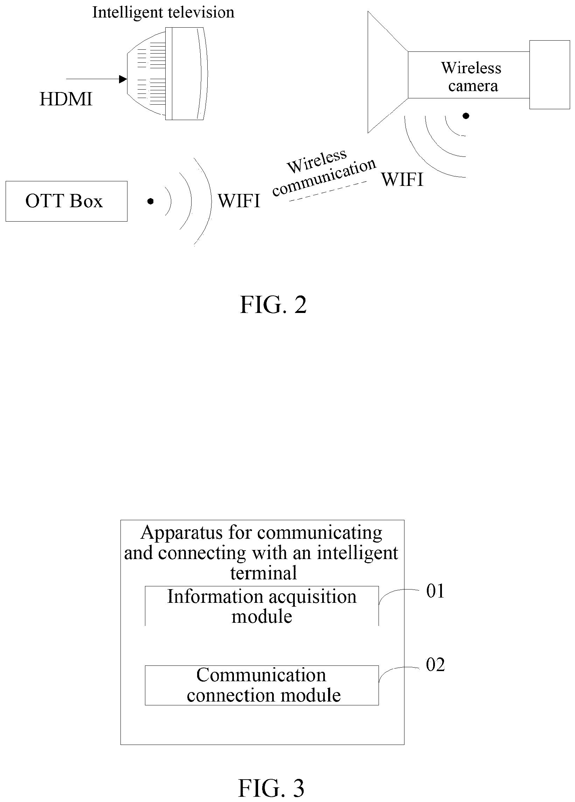

Furthermore, in an embodiment of the present invention, when the intelligent terminal itself is not configured with the display screen or other types of display devices, the intelligent terminal displays the wireless access point information corresponding to the intelligent terminal through a display device connected with the intelligent terminal itself. In one alternative embodiment, the intelligent terminal may display the wireless access point information through an audio/video device connected with the intelligent terminal. With reference to FIG. 2, FIG. 2 is a schematic diagram of operating environment deployment of an application scenario of a method for communicating and connecting with an intelligent terminal according to an embodiment of the present invention. As shown in FIG. 2, the intelligent terminal shown in FIG. 2 is an Over The Top (OTT) box, the wireless peripheral is a wireless camera. When the wireless camera needs to access the OTT box, the OTT box is connected with an intelligent television via a High Definition Multimedia Interface (HDMI) since the OTT box itself does not have a display device while the OTT box is in a working state. Therefore, when the OTT box performs the communication connection with the wireless camera, the OTT box may display the wireless access point information corresponding to the OTT box through a display screen of the intelligent television for the wireless camera to acquire. For example, the OTT box displays a graphic code including the wireless access point information corresponding to the OTT box through the display screen of the intelligent television, and the wireless camera can acquire the wireless access point information corresponding to the OTT box by scanning the graphic code including the wireless access point information corresponding to the OTT box which is displayed on the intelligent television. Then the wireless camera performs the wireless communication connection with the OTT box by using the acquired wireless access point information.

Furthermore, in an embodiment of the present invention, the intelligent terminal may also play the wireless access point information corresponding to the intelligent terminal by means of playing audio information through an audio device configured in the intelligent terminal itself. It is only required to well appoint a playing form of the intelligent terminal playing an audio signal with the wireless peripheral. That is to say, the intelligent terminal plays the audio signal including the wireless access point information corresponding to the intelligent terminal, and the audio signal is only required to be identified by the wireless peripheral. The embodiments of the present invention do not limit a specific playing form of the intelligent terminal playing the audio signal and a frequency band corresponding to the audio signal. After receiving the audio signal including the wireless access point information corresponding to the intelligent terminal played by the intelligent terminal, the wireless peripheral parses the received audio signal and acquires the wireless access point information corresponding to the intelligent terminal. The wireless peripheral performs the communication connection with the intelligent terminal according to the acquired wireless access point information.

In the embodiments of the present invention, the wireless peripheral acquires wireless access point information corresponding to the intelligent terminal prompted by the intelligent terminal with which the communication connection needs to be performed, and performs the communication connection with the intelligent terminal by connecting the wireless access point corresponding to the wireless access point information according to the acquired wireless access point information of the intelligent terminal. Compared to the communication mode of using the USB interface connection in the related art, the embodiments of the present invention avoids the situation of delayed data processing that possibly occurs in a data transmission process caused by a USB data transmission bandwidth limitation, which improves the timeliness of the data transmission. Compared to the related art that requires to perform complicated and tedious wireless connection configuration operations when transmitting by wireless, the embodiments of the present invention have a beneficial effect of improving the usability of the wireless network peripheral wirelessly communicating and connecting with the intelligent terminal.

With reference to FIG. 3, FIG. 3 is a schematic diagram of function modules of an apparatus for communicating and connecting with an intelligent terminal according to an embodiment of the present invention, and the apparatus includes a processor and a storage device. As shown in FIG. 3, in the embodiment of the present invention, the apparatus for communicating and connecting with the intelligent terminal may be interpreted as the wireless peripheral described in the embodiments of FIG. 1 and FIG. 2.

As shown in FIG. 3, the apparatus for communicating and connecting with the intelligent terminal in the embodiment of the present invention includes: an information acquisition module 01 and a communication connection module 02.

The information acquisition module 01 is used for acquiring wireless access point information corresponding to an intelligent terminal prompted by the intelligent terminal with which communication connection needs to be performed.

In the embodiment of the present invention, when a wireless peripheral with a wireless communication function, i.e., the apparatus for communicating and connecting with the intelligent terminal, performs the communication connection with the intelligent terminal, the intelligent terminal is usually taken as a wireless access point, and the information acquisition module 01 acquires the wireless access point information, such as an access name and an access password of the wireless access point, corresponding to the intelligent terminal itself prompted by the intelligent terminal. In the embodiment of the present invention, if prompt ways of the intelligent terminal prompting the included wireless access point information of the intelligent terminal itself are different, acquisition ways of the information acquisition module 01 acquiring the wireless access point information of the intelligent terminal are also different. That is, the information acquisition module 01 adopts a corresponding acquisition way according to a prompt way of the intelligent terminal prompting the wireless access point corresponding to the intelligent terminal, so as to acquire the wireless access point information prompted by the intelligent terminal.

The communication connection module 02 is used for: according to the acquired wireless access point information of the intelligent terminal, performing the communication connection with the intelligent terminal by connecting a wireless access point corresponding to the wireless access point information.

After the information acquisition module 01 acquires the wireless access point information prompted by the intelligent terminal, the communication connection module 02 connects the wireless access point corresponding to the wireless access point information according to the wireless access point information acquired by the information acquisition module 01, so as to perform the communication connection with the intelligent terminal mapped by the wireless access point information. For example, the communication connection module 02 searches all wireless access points that may be searched according to an acquired access point name, and seeks a wireless access point of which the name is consistent with the access point name. After finding the wireless access point corresponding to the access point name, the communication connection module 02 logs in the wireless access point corresponding to the access point name by using an access point password in the acquired wireless access point information, so as to perform the communication connection with the intelligent terminal mapped by the wireless access point.

Furthermore, in an embodiment of the present invention, when the intelligent terminal displays the wireless access point information corresponding to the intelligent terminal through a display device such as a display screen configured in the intelligent terminal itself, for example, when the intelligent terminal displays a graphic code including the wireless access point information of the intelligent terminal through the display screen of the intelligent terminal itself, the information acquisition module 01, such as using a wireless camera, scans the graphic code displayed by the intelligent terminal, and parses the scanned graphic code, so as to acquire the wireless access point information corresponding to the intelligent terminal. Herein, the graphic code including the wireless access point information of the intelligent terminal itself displayed by the intelligent terminal includes a one-dimensional barcode, a two-dimensional barcode or other types of graphic codes. The embodiments of the present invention do not limit specific representation forms of the graphic code including the wireless access point information displayed by the intelligent terminal.

Furthermore, in an embodiment of the present invention, when the intelligent terminal itself is not configured with the display screen or other types of display devices, the intelligent terminal displays the wireless access point information corresponding to the intelligent terminal through a display device connected with the intelligent terminal itself. In one alternative embodiment, the intelligent terminal may display the wireless access point information through an audio/video device connected with the intelligent terminal. As shown in FIG. 2, the intelligent terminal shown in FIG. 2 is an OTT box, the apparatus for communicating and connecting with the intelligent terminal is a wireless camera. When the wireless camera needs to access the OTT box, the OTT box is connected with an intelligent television via a High Definition Multimedia Interface (HDMI) since the OTT box itself does not have a display device while the OTT box is in a working state. Therefore, when the OTT box performs the communication connection with the wireless camera, the OTT box may display the wireless access point information corresponding to the OTT box through a display screen of the intelligent television for the wireless camera to acquire. For example, the OTT box displays a graphic code including the wireless access point information corresponding to the OTT box through the display screen of the intelligent television, and can acquire the wireless access point information corresponding to the OTT box by scanning the graphic code including the wireless access point information corresponding to the OTT box which is displayed on the intelligent television. Then the communication connection module 02 accesses the OTT box by using the wireless access point information acquired by the information acquisition module 01, thereby achieving the purpose of the wireless camera performing the wireless communication connection with the OTT box.

Furthermore, in an embodiment of the present invention, the intelligent terminal may also play the wireless access point information corresponding to the intelligent terminal by means of playing audio information through an audio device configured in the intelligent terminal itself. It is only required to well appoint a playing form of the intelligent terminal playing an audio signal with the apparatus for communicating and connecting with the intelligent terminal. That is to say, the intelligent terminal plays the audio signal including the wireless access point information corresponding to the intelligent terminal, and the audio signal is only required to be identified by the apparatus for communicating and connecting with the intelligent terminal. The embodiments of the present invention do not limit a specific playing form of the intelligent terminal playing the audio signal and a frequency band corresponding to the audio signal. After receiving the audio signal including the wireless access point information corresponding to the intelligent terminal played by the intelligent terminal, the information acquisition module 01 parses the received audio signal and acquires the wireless access point information corresponding to the intelligent terminal. The communication connection module 02 accesses the intelligent terminal according to the wireless access point information acquired by the information acquisition module 01, thereby achieving the purpose of the apparatus for communicating and connecting with the intelligent terminal performing the communication connection with the intelligent terminal.

The embodiment of the present invention acquires the wireless access point information corresponding to the intelligent terminal prompted by the intelligent terminal with which the communication connection needs to be performed, and performs the communication connection with the intelligent terminal by connecting a wireless access point corresponding to the wireless access point information according to the acquired wireless access point information of the intelligent terminal. Compared to the communication mode of using the USB interface connection in the related art, the embodiments of the present invention avoids the situation of delayed data processing that possibly occurs in a data transmission process caused by a USB data transmission bandwidth limitation, which improves the timeliness of the data transmission. Compared to the related art that requires to perform complicated and tedious wireless connection configuration operations when transmitting by wireless, the embodiments of the present invention have a beneficial effect of improving the usability of the wireless network peripheral wirelessly communicating and connecting with the intelligent terminal.

It should be noted that the term "comprise/include", "contain" or any other variants are intended to cover non-exclusive contains in the present invention, so that a process, a method, an object or a apparatus comprising a series of elements not only comprises the elements but also comprises other elements that are not explicitly listed or comprises elements inherent in the process, the method, the object or the apparatus. In the case of no more limitations, elements limited by the statement "comprise one...." do not exclude that other identical elements also exist in the process, the method, the object or the apparatus comprising the elements.

The ordinary person skilled in the art can understand that all or part of the steps in the above method may be completed by a program instructing related hardware, and the program may be stored in a computer readable memory medium, such as a read-only memory, a magnetic disk or an optical disk and so on. Alternatively, all or part of the steps of the above embodiments may also be implemented by using one or multiple integrated circuits. Correspondingly, each module/unit in the above embodiments may be implemented in the form of hardware or be implemented in the form of a software function module. The present invention is not limited to any combination of hardware and software in a specific form.

Certainly, the present invention can still have other various embodiments, the skilled people familiar to the art can make various corresponding changes and transformations according to the present invention without departing from the spirit and essence of the present invention, and these corresponding changes and transformations shall all fall into the protection scope of the claims of the present invention.

### Industrial Applicability

With the technical scheme provided in the embodiments of the present invention, it can be simplified that the wireless connection configuration operations perform when wireless transmission is utilized in the related art, which improves the usability of the wireless network peripheral wirelessly communicating and connecting with the intelligent terminal.

## Claims

1. A method for communicating and connecting with an intelligent terminal, comprising:
acquiring wireless access point information corresponding to an intelligent terminal prompted by the intelligent terminal with which communication connection needs to be performed; and
performing the communication connection with the intelligent terminal by connecting a wireless access point corresponding to the wireless access point information according to the acquired wireless access point information of the intelligent terminal.

2. The method according to claim 1, wherein, the step of acquiring wireless access point information corresponding to an intelligent terminal prompted by the intelligent terminal with which communication connection needs to be performed comprises:
scanning, by using a camera device, a graphic code of the wireless access point displayed by the intelligent terminal, parsing the scanned graphic code, and acquiring the wireless access point information, wherein the graphic code comprises the wireless access point information corresponding to the intelligent terminal.

3. The method according to claim 1, wherein, the step of acquiring wireless access point information corresponding to an intelligent terminal prompted by the intelligent terminal with which communication connection needs to be performed comprises:
scanning, by using a camera device, a graphic code of the wireless access point displayed by an external display apparatus connected with the intelligent terminal, parsing the scanned graphic code, and acquiring the wireless access point information, wherein the graphic code comprises the wireless access point information corresponding to the intelligent terminal.

4. The method according to claim 1, wherein, the step of acquiring wireless access point information corresponding to an intelligent terminal prompted by the intelligent terminal with which communication connection needs to be performed comprises:
receiving, by using an audio device, audio data of the wireless access point played by the intelligent terminal, parsing the received audio data, and acquiring the wireless access point information, wherein the audio data comprises the wireless access point information corresponding to the intelligent terminal.

5. The method according to any one of claims 1 to 4, wherein, the wireless access point information comprises an access name and an access password of the wireless access point corresponding to the intelligent terminal.

6. An apparatus for communicating and connecting with an intelligent terminal, comprising:
an information acquisition module, arranged to acquire wireless access point information corresponding to an intelligent terminal prompted by the intelligent terminal with which communication connection needs to be performed; and
a communication connection module, arranged to: perform the communication connection with the intelligent terminal by connecting a wireless access point corresponding to the wireless access point information according to the acquired wireless access point information of the intelligent terminal.

7. The apparatus according to claim 6, wherein, the information acquisition module is arranged to:
scan, by using a camera device, a graphic code of the wireless access point displayed by the intelligent terminal, parse the scanned graphic code, and acquire the wireless access point information, wherein the graphic code comprises the wireless access point information corresponding to the intelligent terminal.

8. The apparatus according to claim 6, wherein, the information acquisition module is arranged to:
scan, by using a camera device, a graphic code of the wireless access point displayed by an external display apparatus connected with the intelligent terminal, parse the scanned graphic code, and acquire the wireless access point information, wherein the graphic code comprises the wireless access point information corresponding to the intelligent terminal.

9. The apparatus according to claim 6, wherein, the information acquisition module is arranged to:
receive, by using an audio device, audio data of the wireless access point played by the intelligent terminal, parse the received audio data, and acquire the wireless access point information, wherein the audio data comprises the wireless access point information corresponding to the intelligent terminal.

10. The apparatus according to any one of claims 6 to 9, wherein, the wireless access point information comprises an access name and an access password of the wireless access point corresponding to the intelligent terminal.

11. A computer program, comprising a program instruction, wherein, when the program instruction is executed by a device that communicates and connects with an intelligent terminal, the device executes the method according to any one of claims 1-5.

12. A storage medium storing the computer program according to claim 11.
